(19) Europäisches Patentamt
European Patent Office
Office européen des brevets

(11) EP 2 636 485 B1

(12) EUROPEAN PATENT SPECIFICATION

(45) Date of publication and mention
of the grant of the patent:
**20.09.2017 Bulletin 2017/38**

(51) Int Cl.:
*B24B 49/02* (2006.01)    *B24B 9/14* (2006.01)
*B24B 47/22* (2006.01)

(21) Application number: **13001106.7**

(22) Date of filing: **05.03.2013**

(54) **Eyeglass lens processing apparatus**

Vorrichtung zum Bearbeiten von Brillengläsern

Appareil de traitement de verres de lunettes

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2012 JP 2012053362
31.05.2012 JP 2012125528
27.02.2013 JP 2013036692**

(43) Date of publication of application:
**11.09.2013 Bulletin 2013/37**

(73) Proprietor: **NIDEK CO., LTD
Gamagori
Aichi (JP)**

(72) Inventors:
• **Tanaka, Motoshi
Aichi (JP)**
• **Natsume, Katsuhiro
Aichi (JP)**
• **Takeichi, Kyoji
Aichi (JP)**

(74) Representative: **Hoefer & Partner Patentanwälte
mbB
Pilgersheimer Straße 20
81543 München (DE)**

(56) References cited:
**EP-A1- 2 037 209    EP-A1- 2 105 253
EP-A1- 2 335 873    EP-A2- 1 037 008
EP-A2- 2 319 659    FR-A1- 2 669 999
US-A- 5 121 550     US-A1- 2008 248 721**

## Description

### BACKGROUND

The present invention relates to an eyeglass lens processing apparatus for processing a periphery of an eyeglass lens.

In an eyeglass lens processing apparatus, when bevel-processing is performed on the periphery of a lens or chamfering is performed on the edge of the lens, it is necessary to obtain the shape of the refractive surface of the lens (the positions of the edges of the front surface and the rear surface of the lens) along the radius of a target lens shape before processing. Therefore, in the eyeglass lens processing apparatus, a lens shape measuring mechanism (lens edge position measuring mechanism) which has a tracing stylus configured to contact the front surface and the rear surface of the lens is provided (for example, refer to JP-A-2000-317796).

In addition, in the eyeglass lens processing apparatus, a processing tool retracting mechanism for moving a processing tool that performs chamfering on the edge of the lens and performs grooving on the periphery of the lens between a processing position and a retracting position is provided. When roughing and finishing are performed on the periphery of the lens by a roughing tool and a finishing tool, or in a case where the refractive surface of the lens is measured by a lens shape measuring mechanism, the processing tool for chamfering or grooving is moved to the refracting position from the processing position by the processing tool refracting mechanism (for example, refer to JP-A-2001-1815.

EP 2 319 659 A2 discloses an eyeglass lens processing apparatus according to the preamble of appended claim 1. It discloses an eyeglass lens processing apparatus including a lens refractive surface shape measuring means having a tracing stylus configured to contact a refractive surface of the lens. There is provided a linear motion mechanism for moving a tracing stylus in an axial direction of the lens chuck shaft.

### SUMMARY

However, in the apparatus according to the related art, a position in the axial direction of a lens chuck shaft is a fixed position during measurement of the shape of the refractive surface of the lens, and the tracing stylus is configured to be able to move in the axial direction of the lens chuck shaft while following a change in the refractive surface of the lens. Therefore, the tracing stylus needs to ensure a large movable range. In this case, the size of the lens shape measuring mechanism is increased, resulting in an increase in cost. In addition, a driving mechanism for moving the tracing stylus to a predetermined measurement position during measurement is necessary, and thus the configuration of the apparatus is complex.

In addition, the lens shape measuring mechanism of JP-A-2000-317796 is a linear motion mechanism having the tracing stylus linearly moving in the axial direction of the lens chuck shaft. The linear motion mechanism includes a guide rail, a rack, and the like that linearly extend, and the movement position of the tracing stylus in the axial direction of the lens chuck shaft is detected by a sensor via a rack and pinion. In the linear motion mechanism, dust is likely to infiltrate into the mechanism such as the guide rail and the rack, and is likely to cause a problem in the smooth movement of the tracing stylus. When the tracing stylus is not smoothly moved, measurement accuracy is degraded.

EP 1 037 008 A2 discloses a pivoting tracing stylus having an object engager for tracing an edge of the lens.

In addition, in the configuration in which the processing tool for chamfering and grooving is moved by the processing tool retracting mechanism, "wobbling (oscillation)" of the processing tool may occur, resulting in degradation in processing accuracy.

The invention has been made taking the foregoing problems according to the related art into consideration, and a technical object thereof is to improve the apparatus according to the related art. In addition, another technical object thereof is to provide an eyeglass lens processing apparatus capable of measuring the shape of the refractive surface of a lens with a simpler configuration. In addition, another technical object thereof is to provide an eyeglass lens processing apparatus capable of performing lens processing with high accuracy.

In order to accomplish the objects, an apparatus according to appended claim 1 is provided. Further advantageous embodiments are defined by the dependent claims.

According to the invention, it is possible to measure the shape of the refractive surface of the lens with a simpler configuration, and thus an apparatus may be provided at low cost. Lens processing may be performed with high accuracy.

### BRIEF DESCRIPTION OF THE DRAWINGS

Fig. 1 is a schematic configuration diagram of a processing mechanism section of an eyeglass lens processing apparatus.
Fig. 2 is a perspective view of a lens shape measuring unit.
Fig. 3 is a front view of the lens shape measuring unit.
Fig. 4 is a side view of the lens shape measuring unit.
Fig. 5 is a side view of a second lens processing tool.
Fig. 6A is a side view of the eyeglass lens processing apparatus.
Fig. 6B is a view showing an arrangement of each member of the eyeglass lens processing apparatus.
Fig. 7 is a perspective view of a processing chamber where lens processing is performed.

Fig. 8 is a diagram illustrating the configuration of the shield unit.

Fig. 9 illustrates a schematic configuration diagram of the cross-section of the lens chuck shaft 102L side.

Figs. 10A to 10C are views explaining movement of the shield unit.

Fig. 11 is a control block diagram of an apparatus for processing an eyeglass lens periphery.

Fig. 12 is an explanatory view of a state of contact between a lens and a tracing stylus.

Fig. 13 is an explanatory view of a change in the position of the measurement surface of a lens for each lens rotational angle.

Fig. 14 is an explanatory view a change in the position of the refractive surface of the lens according to a change in the distance from a rotation center to each measurement point.

Fig. 15 is an explanatory view of a modified example of predictive control.

Fig. 16 is an explanatory view of a related shield unit.

Fig. 17 is a schematic diagram of a modification example of the lens shape measuring unit.

DESCRIPTION OF EXEMPLARY EMBODIMENTS

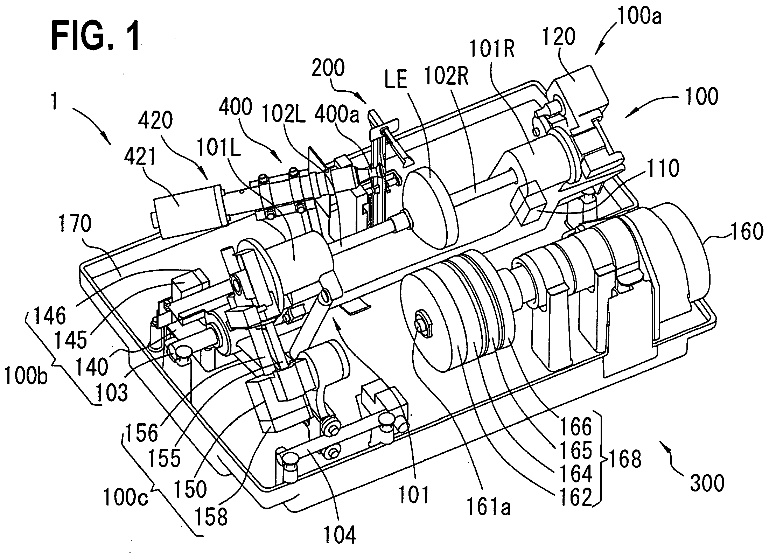

Hereinafter, an embodiment of the invention will be described with reference to the drawings. Fig. 1 is a schematic configuration diagram of a processing mechanism section of an eyeglass lens processing apparatus.

A processing apparatus body 1 includes: a lens holding section 100 that has lens chuck shafts to hold a lens LE to be processed; a lens shape measuring unit 200 that includes a tracing stylus 260 configured to contact a lens refractive surface in order to measure the refractive surface shape of a lens (the front surface and the rear surface of a lens); a first processing tool rotating unit 300 that rotates a processing tool rotating shaft 161a to which a lens processing tool 168 for processing the periphery of the lens is attached; and a second processing tool rotating unit 420 that rotates a processing tool rotating shaft (grindstone spindle) 400a to which a second lens processing tool 400 for processing the periphery of the lens is attached.

The lens holding section 100 includes: a lens rotating unit 100a that rotates a pair of lens chuck shafts 102L and 102R; an X-direction moving unit (chuck shaft moving unit) 100b that moves the lens chuck shafts 102L and 102R in a first axial direction (this is referred to as an X direction); and a Y-direction moving unit (axis-to-axis distance changing unit) 100c that moves the lens chuck shafts 102L and 102R in such a direction (Y direction) to approach or to be distant from the processing tool rotating shaft 161a and the processing tool rotating shaft 400a. The Y-direction moving unit 100c is also used as a lens moving unit that relatively moves the lens LE in a direction in which the distance between the lens chuck shafts 102L and 102R and the tracing stylus 260 is changed. The lens chuck shafts 102L and 102R are moved in the forward, rearward, leftward, and rightward directions (XY directions) during measurement of the shape of the lens LE and during processing of the periphery of the lens LE.

Hereinafter, a specific example of the processing apparatus body 1 will be described in detail. The lens holding section 100 is attached on a base 170 of the processing apparatus body 1.

The lens chuck shaft 102L and the lens chuck shaft 102R are respectively held by a left arm 101L of a carriage 101 of the lens holding section 100 and a right arm 101R thereof coaxially with each other so as to be rotatable. The lens chuck shaft 102R is moved toward the lens chuck shaft 102L side by a motor 110 attached to the right arm 101R, and the lens LE is held by the two lens chuck shafts 102R and 102L. The two lens chuck shafts 102R and 102L are rotated in synchronization with each other via a rotation transmitting mechanism such as a gear by a motor 120 attached to the right arm 101R. These constitute the lens rotating unit 100a.

The carriage 101 is attached on an X-axis movement supporting base 140 that is able to move along shafts 103 and 104 extending in parallel to the lens chuck shafts 102R and 102L and the processing tool rotating shaft 161a. A ball screw (not illustrated) that extends in parallel to the shaft 103 is attached to the rear portion of the support base 140, and the ball screw is attached to the rotating shaft of a motor 145 for X-axis movement. The carriage 101 is linearly moved in the X direction (the axial direction of the lens chuck shaft) along with the support base 140 by the rotation of the motor 145. Accordingly, the X-direction moving unit 100b is constituted. An encoder 146 which is a detector for detecting movement in the X direction of the carriage 101 is provided on the rotating shaft of the motor 145.

The movement positions in the X direction of the lens chuck shafts 102R and 102L detected by the encoder 146 as the detector in this embodiment are used when the refractive surface shapes of the front surface and the rear surface of a lens are obtained.

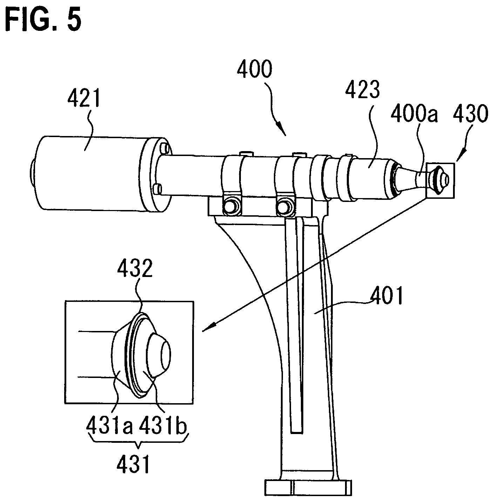

A shaft 156 that extends in a direction that connect the lens chuck shafts 102R and 102L to the grindstone rotating shaft 161a is fixed to the support base 140. The Y-direction moving unit 100c which is moved in a direction in which the axis-to-axis distance between the lens chuck shafts 102R and 102L and the grindstone rotating shaft 161a is changed with respect to the shaft 103 as the center is configured (see Fig. 5). The Y-direction moving unit of this apparatus has a configuration in which the lens chuck shafts 102R and 102L are turned about the shaft 103 as the center but may also have a configuration in which the distance between the lens chuck shafts 102R and 102L and the grindstone rotating shaft 161a is linearly changed.

A motor 150 for Y-axis movement is fixed to the support base 140. Rotation of the motor 150 is transmitted to the ball screw 155 extending in the Y direction, and the carriage 101 is moved in the Y direction by the rotation of the ball screw 155. Accordingly, the Y-direction moving unit 100c is configured. The rotating shaft of the motor 150 is provided with an encoder 158 which is a detector for detecting movement in the Y direction of the carriage 101.

In Fig. 1, at a position which is on the upper side of the carriage 101 and is in an opposite direction to the first lens processing tool 168 with the carriage 101 interposed therebetweeen, the lens shape measuring unit 200 and the second lens processing tool 400 are provided. The lens shape measuring unit 200 includes the tracing stylus 260 (260a and 260b) for measuring the refractive surface shapes of the front and rear surfaces of a lens.

<Lens Shape Measuring Unit>

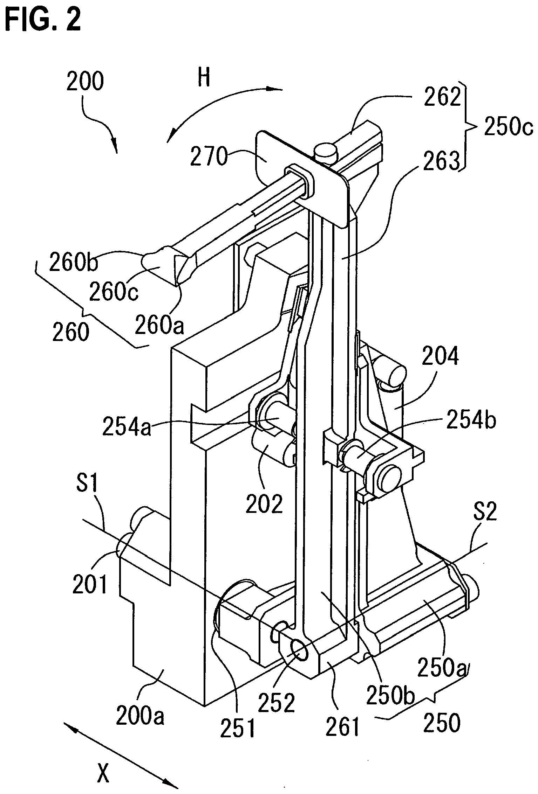

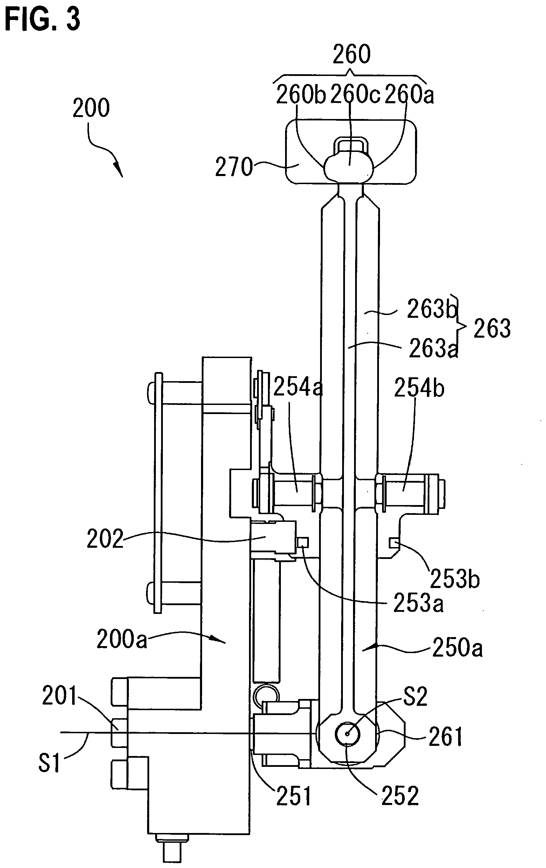

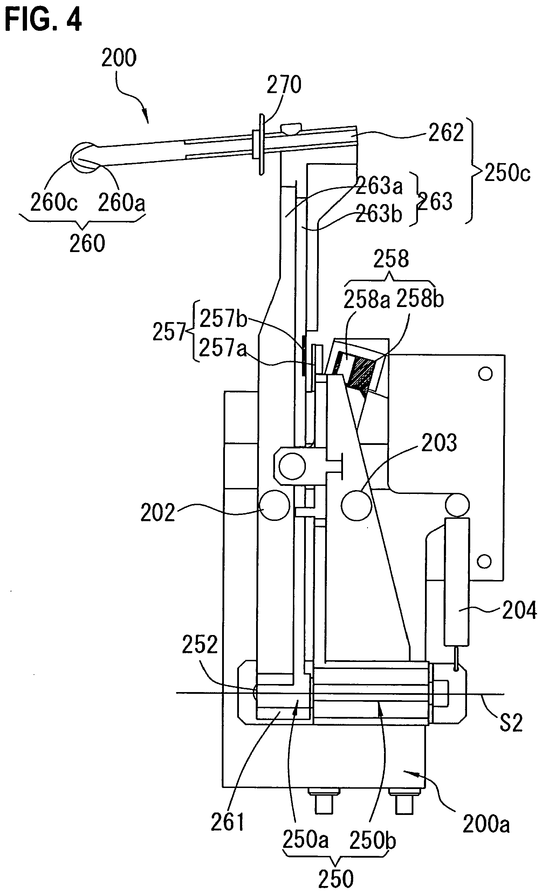

Fig. 2 is a perspective view of the lens shape measuring unit 200, Fig. 3 is a front view of the lens shape measuring unit 200, and Fig. 4 is a side view of the lens shape measuring unit 200.

The lens shape measuring unit 200 includes: a holding unit (250c) which is a holding unit to which the tracing stylus 260 configured to contact the refractive surface (at least one of the front surface and the rear surface of the lens) of the lens LE is attached, and is able to be tilted in the first axial direction about an axis S2 orthogonal to the lens chuck shafts 102R and 102L (first axis: X direction); and a sensor (257) that detects the tilt of the holding unit. Preferably, the holding unit (250c) is configured to be able to be tilted in a second direction to approach or to be separated from the lens chuck shafts 102R and 102L about an axis S1 parallel to the lens chuck shafts 102R and 102L. The lens shape measuring unit 200 includes a sensor (258) that detects a tilt of the holding unit in the second direction (H direction). Hereinafter, an example of the lens shape measuring unit 200 will be described.

The lens shape measuring unit 200 is constituted by a fixed unit 200a fixed to the base 170 of the processing apparatus body 1 and a movable unit 250 which is oscillated (tilted) in the forward, rearward, leftward, and right directions (the X direction and the Y direction) with respect to the fixed unit 200a. Furthermore, the movable unit 250 is constituted by a first movable section 250a that causes the tracing stylus 260 to be tilted in the forward and rearward direction (H direction: in a direction to approach and to be separated from the chuck shafts 102L and 102R) with respect to the fixed unit 200a, and a second movable section 250b that causes the tracing stylus 260 to be tilted in the leftward and rightward direction (X direction) with respect to the fixed unit 200a.

The fixed unit 200a includes: a shaft 201 that extends in parallel (the X direction) to the lens chuck shafts 102R and 102L; a pin 202 that restricts the forward movement (in a direction toward the lens chuck shafts) of the movable unit 200a; and a pin 203 that restricts the rearward movement (in a direction to be separated from the lens chuck shafts) (see Fig. 4).

The first movable section 250a includes: a bearing 251 through which the shaft 201 is inserted; a shaft 252 that extends in the forward and rearward direction that is perpendicular to the lens chuck shafts 102R and 102L; pins 253a and 253b for restricting the tilt in the X direction of the second movable section 250b; and springs 254a and 254b that hold the initial position in the X direction of the second movable section 250b and add a measurement pressure to a lens during lens shape measurement (see Fig. 3).

The second movable section 250b includes: a bearing 261 through which the shaft 252 is inserted; the tracing stylus 260 that abuts on the refractive surface (the front and rear surfaces) of a lens LE to be processed; an arm 262 having the tracing stylus 260 at the tip end; and a support shaft 263 for supporting the arm 262. The arm 262 and the support shaft 263 constitute the holding unit 250c. In the rear of the tracing stylus 260 and on the axis of the arm 262, a waterproof plate 270 is attached for preventing processing water that flows into a processing chamber when the lens shape measuring unit 200 is attached to the apparatus body from infiltrating into the lens shape measuring unit 200. Illustration of the configuration of the processing chamber is omitted.

The support shaft 263 is a columnar member that extends in the upward and downward direction (Z direction) in a state where the lens shape measuring unit 200 is fixed to the base 170, and is constituted by a columnar portion 263a at the center and a plate portion 263b provided on the left and the right with respect to the columnar portion 263a as the center. The plate portion 263b is formed to be thinner than the columnar portion 263a. As the left and right ends of the plate portion 263b abut on the pins 253a and 253b, the maximum value of a tilt angle in the leftward and rightward direction (X direction) of the holding unit 250c included in the movable unit 250 is determined, and as the front and the rear of the plate portion 263b abut on the pins 202 and 203, the maximum value of a tilt angle in the forward and rearward direction of the holding unit 250c is determined. For example, a tilt angle in the X direction of the holding unit 250c (the support shaft 263) of this embodiment is about ±3 degrees, and the movable range of the tracing stylus 260 is ±8 mm in the leftward and rightward direction (a movable range during measurement of the front surface of a lens) and is 8 mm in the rightward direction (a movable range during measurement of the rear surface of a lens). This is a distance shorter than a change amount of the refractive surface of a high-curve lens. A tilt angle in the forward and rearward direction (H direction) is about 4 degrees, and a movable distance of the tracing stylus 260 is (about) 10 mm.

The holding unit 250c is formed in an L shape by mounting the arm 262 to extend toward the lens chuck shafts 102R and 102L from the position of the upper end of the support shaft 263.

The tracing stylus 260 attached to the tip end of the arm 262 has a contact surface 260c that is formed in an elliptical shape extending in a direction perpendicular to the axis of the arm 262 (the leftward and rightward direction) when viewed from the front surface as illustrated in Fig. 3, and at both longitudinal ends of the contact surface 260c, a tip end 260a as a tracing stylus configured to contact with the front surface of the lens LE and a tip end 260b as a tracing stylus configured to contact the rear surface of the lens LE are respectively formed. The tip ends 260a and 260b configured to contact the lens LE have roundness and thus are less likely to be caught even when the measurement surface of the lens is uneven.

The contact surface 260c is a part configured to contact the peripheral surface of the lens LE and the surface shape thereof is formed as a curved surface so that the contact area between the contact surface 260c and the edge of the lens LE is reduced during measurement of the position of the edge using the tracing stylus 260 described later.

The tracing stylus 260 is formed to have a thickness with such a strength that inconvenience such as breakage does not occur during shape measurement, and the tip ends 260a and 260b have tapered shapes of which thicknesses are gradually reduced in order to avoid interference between the lens LE and the holding unit 250c during measurement.

Moreover, in this embodiment, considering that the curve of the rear surface of a lens has a tendency to become sharper than the front surface, the tip end 260b configured to contact the rear surface of the lens protrudes in the axial direction from the tip end 260a configured to contact the front surface of the lens LE. Accordingly, occurrence of the interference between the holding unit 250c and the lens LE during measurement of the front and rear surfaces of the lens LE is suppressed.

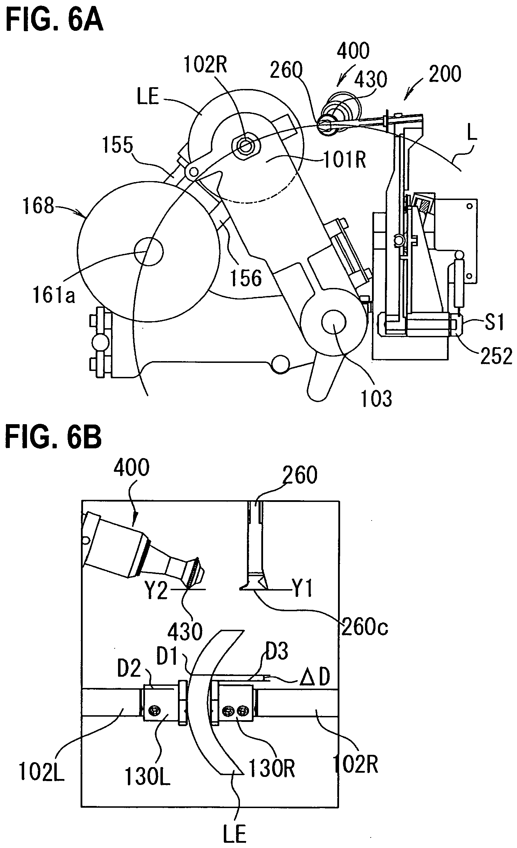

In the holding unit 250c having the configuration as described above, the height of the support shaft 263 and the length of the arm 262 (the tile angle with respect to the chuck shafts 102R and 102L) are determined so that the tracing stylus 260 (the tip ends 260a and 260b) are positioned on a movement path L in the Y direction of the lens chuck shafts 102R and 102L (see Fig. 6). As the tracing stylus 260 is placed on the movement path L of the lens chuck shafts 102R and 102L, measurement of the shapes of the front and rear surfaces of a lens is performed using the movement of the lens LE by the lens holding section 100.

The waterproof plate 270 may be formed to have such a size to cover a range in which the tracing stylus 260 is moved when the holding unit 250c is tilted to the left or right. In this embodiment, since shape measurement is performed mainly by moving the lens LE side, the movement distance (tilt angle) of the tracing stylus 260 is narrowed as much as possible, and thus the configuration of an apparatus that reduces the size of the waterproof plate 270 may further be simplified. Since the movement range of the tracing stylus 260 is narrow, water droplets are less likely to leak out from the processing chamber. Moreover, in this embodiment, the arm 262 having the tracing stylus 260 attached thereto is tilted like an apron from the base end toward the tip end (the tracing stylus 260), thereby achieving a configuration in which water droplets that adhere to the tracing stylus 260 and the lens holding unit are guided into the processing chamber and water droplets are less likely to leak out of the processing chamber.

In the lens shape measuring unit 200 having the configuration as described above, the bearing 251 of the first movable section 250a is attached to the shaft 201 of the fixed unit 200a and the bearing 261 of the second movable section 250b is attached to the shaft 252 of the first movable section 250a so as to be integrated with each other. Accordingly, the holding unit 250c is able to tilt in the forward and the rearward direction (H direction) as the axis S1 (first fulcrum) of the shaft 201 such that the tracing stylus 260 is moved in the forward and rearward direction. The holding unit 250c is able to tilt in the X direction about the axis S2 (second fulcrum) of the shaft 252 such that the tracing stylus 260 is moved in the leftward and rightward direction (X direction).

When the movable unit 250 is attached to the fixed unit 200a, the springs 254a and 254b are positioned on both sides (the X direction) of the support shaft 263 of the movable unit 250. Accordingly, the initial position in the X direction of the holding unit 250c is maintained by the repulsion of the spring, and during measurement, by the impelling force added by the springs 254a and 254b, the tracing stylus 260 is appropriately pressed against the rotating lens LE.

The pins 253a and 253b are fixed at positions below the springs 254a and 254b and on the left and right of the support shaft 263. The pins 253a and 253b interfere with the support shaft 263 and restrict the tracing stylus 260 (the holding unit 250c) from being tilted at a predetermined or greater angle in the X direction about the axis S2 as the center.

As illustrated in Fig. 4, one end (upper end) of the fixed unit 200a and one end (lower end) of the movable unit 250 are connected with a tension spring 204 such that the initial position in the forward and rearward direction (H direction) of the movable unit 250 (the holding unit 250c) is maintained by the tension of the spring 204. When the tracing stylus 260 is tilted rearward, the spring 204 is stretched and thus repulsion occurs in a direction to return the tracing stylus 260 to the initial position.

At the positions in the forward and rearward direction with the support shaft 263 interposed therebetween, the pins 202 and 203 that restrict the tracing stylus 260 from being tilted by a predetermined or greater angle in the H direction about the shaft S1 as the center are fixed. The forward pin 202 in the initial state is fixed to the position close to the support shaft 263 and restricts a forward tilt of the holding unit 250c. On the other hand, the rearward pin 203 is fixed in the rear distant from the support shaft 263 by a predetermined distance and restricts a rearward tilt of the holding unit 250c. That is, the holding unit 250c is tilted further rearward than forward.

A change in the tilt angle (movement position) in the forward, rearward, leftward, and rightward directions of the holding unit 250c is detected by a sensor 257 which is a first detecting section that detects a tilt angle (movement position) in the X direction and by a sensor 258 which is a second detecting section that detects a tilt angle (movement position) in the forward and rearward direction (H direction). For example, well-known linear encoders or the like are used as the sensors 257 and 258. In this case, a detecting section 257a of the sensor 257 is attached to the second movable section 250b, and a scale 257b for position detection is provided on the opposing second movable section 250b side. Accordingly, a movement amount in the X direction of the holding unit 250c is obtained from a change in the result of reading the scale 257b illuminated with a light beam emitted by a light source included in the detecting section 257a.

Similarly, the detecting section 258a of the sensor 258 is attached to the second movable section 250b side, and a scale 258b is provided on the opposing fixed unit 200a side. Accordingly, a movement amount in the H direction of the holding unit 250c is obtained from a change in the result of reading the scale 258b by the detecting section 258a.

In the above description, an example in which a light reflective sensor is used is described. Besides, various types of sensors may also be used to detect positions in the forward, rearward, leftward, and rightward directions of the holding unit 250c. For example, a transmissive sensor which uses slits instead of the scale 257b may also be used. Moreover, a rotary sensor such as a rotary encoder may also be used as the sensors 257 and 258, and in this case, the sensors 257 and 258 are respectively attached to the shaft 261 which is the second fulcrum and the shaft 201 which is the first fulcrum.

<First Lens Processing Tool>

On the other hand, the first lens processing tool 168 which is one of lens processing tools is installed on the opposing side to the lens shape measuring unit 200 with the carriage 101 interposed therebetween on the base 170. The first lens processing tool 168 is constituted by a glass roughing grindstone 162, a finishing grindstone 164 having a V groove (bevel groove) VG to form a bevel on the lens and a flat processing surface, a flat-polish-finishing grindstone 165, a plastic roughing grindstone 166, and the like and is attached coaxially with the grindstone spindle (grindstone rotating shaft) 161a rotated by a motor 160. The lens LE to be processed, which is nipped between the lens chuck shafts (lens rotating shafts) 102L and 102R included in the carriage 101 comes in pressing contact with the lens processing tool 168 to be subjected to periphery processing. The first lens processing tool 168 is configured to have a large diameter of 60 to 100 mm in order to efficiently perform roughing and finishing on the periphery of the lens.

<Second Lens Processing Tool>

The second lens processing tool 400 which is one of lens processing tools is installed on the opposing side (opposite side) to the first lens processing tool 168 with the carriage 101 interposed therebetween on the base 170. The second lens processing tool 400 is disposed side by side with the lens shape measuring unit 200 (the tracing stylus 260) and is located outside the movement range of the tracing stylus 260 of the lens shape measuring unit 200 in the X-axis direction which is the axial direction of the lens chuck shaft. The second lens processing tool 400 and the tracing stylus 260 of the lens shape measuring unit 200 are disposed on the movement path of the lens chuck shaft (details will be described later).

Fig. 5 illustrates a side view of the second lens processing tool 400. In Fig. 5, an enlarged view of a region (grindstone part) 430 surrounded by a dotted line portion is illustrated. For example, the second lens processing tool 400 is prepared as a processing tool that performs at least one processing of grooving and chamfering on the periphery of the lens subjected to finishing. In this example, the second lens processing tool 400 is constituted by a chamfering grindstone 431, a grooving grindstone 432, and the like. The second lens processing tool 400 is attached coaxially with the spindle (the processing tool rotating shaft) 400a rotated by a motor 421. The lens LE to be processed, which is nipped between the lens chuck shafts (lens rotating shafts) 102L and 102R included in the carriage 101 comes in processing contact with the second lens processing tool 400 to be subjected to periphery processing.

A support base block 401 is fixed to the base 170. A holding member 423 is fixed to the support base block 401. The holding member 423 rotatably holds the grindstone rotating shaft 400a. The rotating shaft of the motor 421 is connected to the grindstone rotating shaft 400a inside the holding member 423. By driving of the motor 421, the grindstone rotating shaft 425 is rotated along with the rotation of the rotating shaft of the motor 421.

The chamfering grindstone 431 and the grooving grindstone 432 are attached to the right end of the grindstone rotating shaft 400a. The chamfering grindstone 431 includes a chamfering grindstone 431a for the rear surface of the lens and a chamfering grindstone 431b for the front surface of the lens. The grooving grindstone 432 is provided between the two chamfering grindstones 431a and 431b. That is, the two chamfering grindstones 431a and 431b and the grooving grindstone 432 are configured in one body. The diameters of the grooving grindstone 432 and the two chamfering grindstones 431a and 431b are smaller than that of the first lens processing tool 168 and are, about 30 mm. The chamfering grindstones 431a and 431b at both ends have processing tilt surfaces of which the diameters are reduced outward from the grooving grindstone 432.

The grindstone rotating shaft 400a is disposed to be tilted at 8 degrees with respect to the axial line direction of the lens chuck shafts 102L and 102R, and groove formation is performed to easily follow the lens curve by the grooving grindstone 432. The tilt surface of the chamfering grindstone 431a for the rear surface of the lens and the tilt surface of the chamfering grindstone 431b for the front surface of the lens are designed so that the chamfered angles of the edge corner portions of the lens LE nipped between the lens chuck shafts 102L and 102R respectively become 55 degrees and 40 degrees. The lens LE nipped between the lens chuck shafts (lens rotating shafts) 102L and 102R included in the carriage 101 comes in processing contact with the second lens processing tool 400 to be subjected to periphery processing.

Fig. 6A is a side view of the eyeglass lens processing apparatus. In the eyeglass lens processing apparatus 1 having the above configuration, the rotating shaft 161a of the first lens processing tool 168, the lens chuck shafts 102R and 102L of the lens holding section 100, the grindstone part 430 of the second lens processing tool 400, and the tracing stylus 260 of the lens shape measuring unit 200 are disposed on the same arc path L about the axis S1 of the shaft 103 as the center. That is, the processing tool rotating shaft 161a, the processing tool rotating shaft 400a, and the tracing stylus 260 (the tip ends 260a and 260b of the tracing stylus) are disposed on the same path as the movement path L in the Y direction which is a direction in which the axis-to-axis distance between the lens chuck shafts 102R and 102L is changed. However, the tracing stylus 260 may not necessarily be disposed on the movement path L in the Y direction of the lens chuck shafts 102R and 102L. The tracing stylus 260 may be disposed to have an existing relationship with respect to the movement path L.

Accordingly, the lens holding section 100 (the lens chuck shafts 102R and 102L) is moved in the forward and rearward direction (Y direction) by driving of the Y-direction movement unit 100c of the lens holding section 100, and thus positioning of each member for lens shape measurement by the tracing stylus 260, lens periphery processing by the lens processing tool 168, and chamfering and grooving by the second lens processing tool 400 is performed.

Fig. 6B is a diagram illustrating the arrangement of the members of the eyeglass lens processing apparatus. Regarding the arrangement of the second lens processing tool 400 and the lens shape measuring unit 200, a first position of the second lens processing tool 400 which is closest to the lens chuck shafts 102L and 102R in the Y direction and a second position of the tracing stylus 260 which is closest to the lens chuck shafts 102L and 102R in the Y direction are arranged to be in a predetermined distance. For example, in this example, the distance ΔD between the first position Y1 (the grindstone part 430) of the second lens processing tool 400 and the second position Y2 (the tip end surface 260c) of the tracing stylus 260 is arranged to be a predetermined distance. For example, the predetermined distance is a distance ΔD which is the difference between a minimum processing diameter D1 where the periphery of the lens held by the lens chuck shafts 102L and 102R is able to be processed, and an outside diameter D2 of the lens chuck shafts 102L and 102R or an outside diameter D3 of holding members (a processing tool 130L attached to the lens chuck shaft 102L and a lens pressing member 130R attached to the lens chuck shaft 102R) attached to the lens chuck shafts 102L and 102R. The minimum processing diameter D1 is a value set by adding a predetermined margin to the maximum diameter of the processing tool 130L.

In this configuration, during measurement of the lens shape, measurement of the lens shape for the minimum processing diameter of the lens LE may be performed without the interference in the lens chuck shaft 102L or the holding members (130R and 130L) by the grindstone part 430 of the second lens processing tool 400. During grooving and chamfering of the lens LE by the grindstone part 430, processing to the minimum processing diameter of the lens LE may be performed without the interference in the lens chuck shaft 102R or the holding members (130R and 130L) by the tracing stylus 260.

In this example, the second lens processing tool 400 and the lens shape measuring unit 200 are arranged in parallel so that the grindstone part 430 and the tip end surface 260c are aligned with each other. That is, the second lens processing tool 400 and the lens shape measuring unit 200 are arranged to achieve ΔY=0. As such, the configuration of the aligned arrangement enables reduction in the movement range of the lens chuck shafts and enables reduction in the size of the apparatus, which is preferable. As a matter of course, the present invention is not limited to the configuration in which the grindstone part 430 and the tip end surface 260c are aligned with each other. A configuration in which they are arranged in parallel in the X direction so that the distance ΔY from the first position Y1 of the second lens processing tool 400 to the second position Y2 of the tracing stylus 260 is in a predetermined distance ΔD may be employed.

The position of the motor 421 of the second lens processing tool 400 is disposed outside the movement range in the X direction of the carriage 101 by forming the holding member 423 in a long shape so as to prevent the interference with the carriage 101. That is, by causing the position of the motor 421 to be outside the movement range in the X direction of the carriage 101, when the carriage 101 is moved in the Y direction and approaches the second lens processing tool 400 (for example, when the minimum processing diameter of the lens is processed), the carriage 101 and the motor 421 do not interfere with each other.

<Shield Unit>

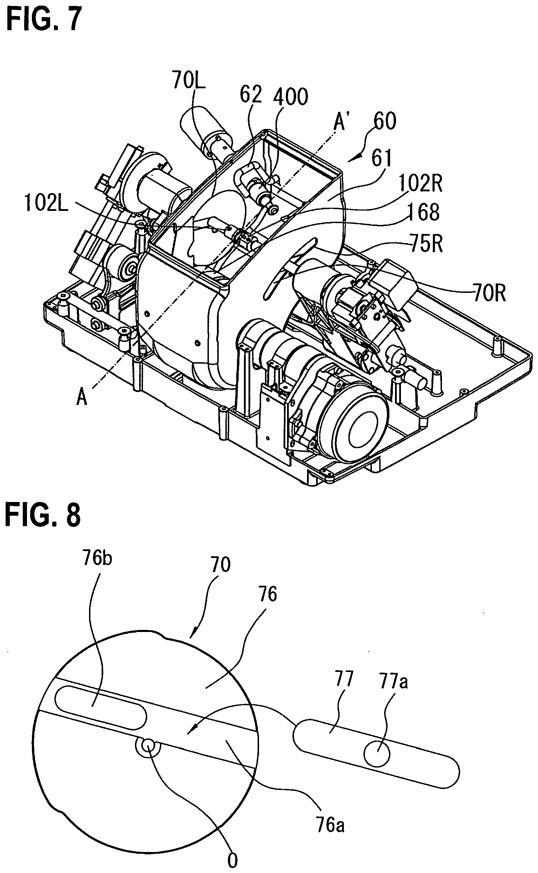

Fig. 7 is a diagram illustrating a perspective view of a processing chamber 60 where lens processing is performed. In the processing chamber 60, a waterproof cover 61, the first lens processing tool 168, the lens shape measuring unit 200, the second lens processing tool 400, and the lens chuck shafts 102L and 102R are arranged. The waterproof cover 61 is fixed in a processing region that encloses the first lens processing tool 168, the lens shape measuring unit 200, the second lens processing tool 400, and the lens chuck shafts 102L and 102R so as to prevent grinding water from leaking from the processing chamber 60. The processing chamber 60 is divided from mechanism parts such as motors and the like by the waterproof cover 61. In the processing chamber 60, a nozzle 62 for the second lens processing tool and a nozzle (not illustrated) for the first lens processing tool extend. During grinding of the lens LE, the grinding water is ejected from each of the nozzles.

Here, in order to enable the lens LE nipped between the lens chuck shafts 102L and 102R to be positioned on the first lens processing tool 168, the lens shape measuring unit 200, and the second lens processing tool 400, long holes 75L and 75R having shapes along the movement path in the Y direction of the lens chuck shafts 102L and 102R are respectively formed in the side walls of a left cover (a cover on the lens chuck shaft 102L side) and a right cover (a cover on the lens chuck shaft 102R side) of the waterproof cover 61. The long holes 75L and 75R are through-holes. The lens chuck shafts 102L and 102R are inserted through the long holes 75L and 75R and are moved (elevated) in a predetermined range (a range that achieves the minimum processing diameter of the lens by the first lens processing tool 168 and the second lens processing tool 400) along the movement path in the Y direction.

Shield units 70 (70L and 70R) that are elevated along with the lens chuck shafts 102L and 102R are respectively connected to the lens chuck shafts 102L and 102R on the inside of the waterproof cover 61 where the long holes 75L and 75R are formed. That is, the shield units 70L and 70R are respectively connected to the lens chuck shafts 102L and 102R. The shield unit 70 is made of a member having waterproofing properties, and for example, is formed of a resin material.

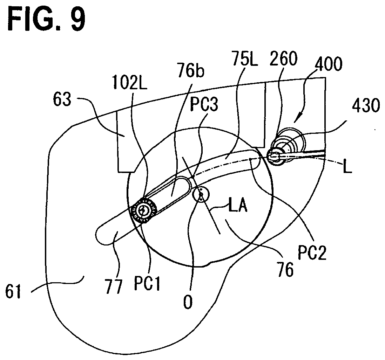

Fig. 8 is a diagram illustrating the configuration of the shield unit 70, and illustrates the shield unit 70 disposed on the left cover of the waterproof cover 61. Fig. 9 illustrates a schematic configuration diagram of the cross-section of the lens chuck shaft 102L side, taken along the line A-A' in Fig. 7. The shield unit 70 disposed on the right cover of the waterproof cover 61 is the reversal of Fig. 8, and thus description thereof will be omitted.

The shield unit 70 is constituted by a rotating plate (outer member) 76 and a sliding plate (inner member) 77. The rotating plate 76 has a substantially circular shape and is formed to have a size that covers the long hole 75L. The rotating plate 76 is held by the waterproof cover 61 to be able to rotate about the center shaft O about the center of the center shaft (shaft member) O as the rotational center. A configuration in which a member that holds the outer peripheral side of the rotating plate 76 is provided as a holding mechanism for the rotation of the rotating plate 76 without using the shaft member O may be employed.

The lens chuck shaft 102L is inserted through a long hole 76b of the rotating plate 76, a hole 77a of the sliding plate 77, and the long hole 75L of the waterproof cover 61. That is, the lens chuck shaft 102L is inserted through the rotating plate 76, the sliding plate 77, and the waterproof cover 61 in this order from the inside to the outside of the processing chamber 60. A slight space (gap) is provided between the lens chuck shaft 102L and the hole 77a of the sliding plate 77. Accordingly, the lens chuck shafts 102L and 102R are held to be able to rotate relative to the sliding plate 77.

The rotational center of the rotating plate 76 is disposed on the perpendicular bisector LA of a line segment that connects a position PC1 and a position PC2 of a range in which the lens chuck shaft 102L is movable in the Y direction (see Fig. 9). The rotational center may be at a position distant from the perpendicular bisector LA, and is preferably disposed on the perpendicular bisector LA in order to reduce the outside diameter of the rotating plate 76. The radius of the rotating plate 76 is formed to be smaller than the radius of the movement path in the Y direction of the lens chuck shaft 102L about the shaft 103. The outside diameter of the rotating plate 76 is formed to have a size (a radius smaller than the distance from the rotational center to the outside diameter of the processing tool rotating shaft 400a) that does not interfere with the second processing tool rotating unit 420 (the processing tool rotating shaft 400a). The position PC1 is a position where the lens chuck shaft 102L is closest to the processing tool rotating shaft 161a. The position PC2 is a position where the lens chuck shaft 102L is closest to the processing tool rotating shaft 400a.

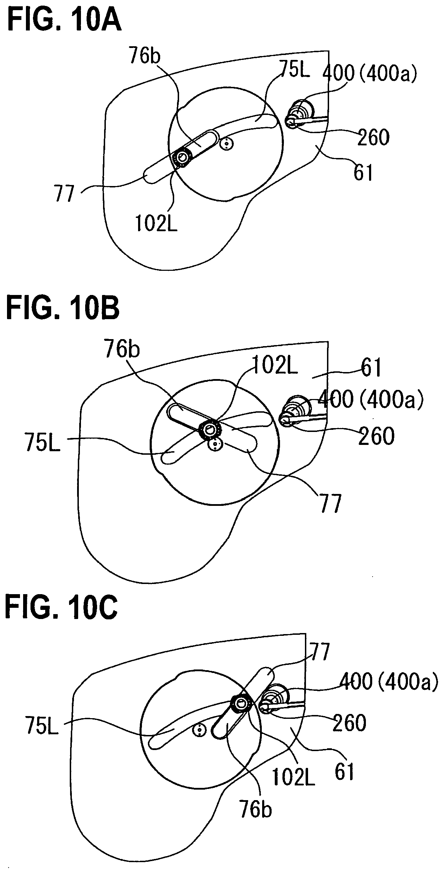

The long hole 76b through which the lens chuck shaft 102L is inserted is formed in the rotating plate 76. The long hole 76b has a width to have the lens chuck shaft 102L inserted therethrough, and has a length that enables movement of the lens chuck shaft 102L between the position PC3 where the lens chuck shaft 102L is closest to the rotational center of the rotating plate 76 and the farthest position (PC1 or PC2) during the movement of the lens chuck shaft 102L in the Y direction (axis-to-axis direction) (see Figs. 10A, 10B, and 10C).

The sliding plate 77 is connected to the lens chuck shaft 102L, and is held by the rotating plate 76 to be able to slide in the longitudinal direction of the long hole 76b along with the movement in the Y direction of the lens chuck shaft 102L. In this example, the sliding plate 77 is inserted between the waterproof cover 61 and the rotating plate 76. The sliding plate 77 is formed to have a size that blocks the long hole 76b even when the lens chuck shaft 102L is moved between the positions PC1, PC3, and PC2. The length in the sliding direction of the sliding plate 77 may be a length that satisfies twice that in the longitudinal direction of the long hole 76b.

In the rotating plate 76, a groove (guide) 76a for guiding sliding of the sliding plate 77 is formed. The depth of the guide 76a is formed to be substantially the same as the thickness of the sliding plate 77. The shape in the longitudinal direction of the guide 76a may be a shape in which the sliding plate 77 is slidable. For example, a straight lien shape or an arc shape may be employed.

The sliding plate 77 has a long round shape and a hole 77a formed at the center. The shape of the sliding plate is not limited to the long round shape, and may be a shape that is able to slide along the guide 76a and blocks the long hole 76b. For example, a rectangular shape, an arc shape, and the like may be employed.

Here, the longitudinal direction of the long hole 76b is disposed in a direction tilted with respect to a direction (that is, the line segment LA) in which the position PC3 and the rotational center (the center of the center shaft O) are connected so that the sliding plate 77 does not interfere with the center shaft O when the lens chuck shaft 102L is moved to the position PC3 (see Fig. 10(b)). When the lens chuck shaft 102L is moved to the position PC2 from the position PC3, the lens chuck shaft 102L presses a side wall (an inside wall) of the long hole 76b such that the rotating plate 76 is rotated. When the lens chuck shaft 102L is moved to the position PC2, that is, when the lens chuck shaft 102L is moved to the position that is closest to the second lens processing tool 400, a part of the sliding plate 77 is moved to the outside from the outside diameter of the rotating plate 76. At this time, so as not to cause the rotating plate 76 to interfere with the second processing tool rotating unit 420 (the processing tool rotating shaft 400a) disposed to be non-retractable, as illustrated in Fig. 10(c), the longitudinal direction of the long hole 76b (that is, the sliding direction of the sliding plate 77) is disposed to intersect the long hole 75L. The shape of the long hole 76b is not limited to the long round shape and may be configured to enable the lens chuck shafts 102L and 102R to change the axis-to-axis distance from the rotating plate 76. For example, a rectangular shape, an arc shape, and the like may be employed.

As described above, in the configuration of the shield unit, since the length of the sliding plate 77 that moves along with the movement in the Y direction of the lens chuck shaft 102L is much shorter than twice the length in the Y direction of the long hole 75L formed in the waterproof cover 61, and thus the degree of freedom of designing of the apparatus can be increased without increase in the size of the apparatus. Particularly, in the apparatus of this example, the second lens processing tool 400 may be disposed to be non-retractable on the movement path in the Y direction of the lens chuck shaft 102L.

The shield unit 70 disposed on the lens chuck shaft 102R side is the same mechanism as illustrated in Figs. 8 and 9. The longitudinal direction of the long hole 76b is disposed to intersect the long hole 75R so that a part of the sliding plate 77 that moves outside the outside diameter of the rotating plate 76 does not interfere with the first processing tool rotating unit 300 when the lens chuck shaft 102R is moved to the position that is closest to the first lens processing tool 168.

A part of the side wall of the waterproof cover 61 protrudes toward the inside of the processing chamber 60 to provide an awning 63, which covers the upper side of the shield unit so as to prevent the grinding water from infiltrating between the shield unit 70 and the side wall of the waterproof cover 61 from the upper side of the shield unit 70. The awning 63 is configured so as not to interfere with the sliding plate 77 when the sliding plate 77 is moved on the guide 76b of the rotating plate 76.

Hereinafter, a relationship between the movement of the lens chuck shafts 102L and 102R and the movement of the shield unit 70 will be described. Fig. 10 is a diagram illustrating the relationship between the movements of the lens chuck shaft 102L and the shield unit 70. When the lens chuck shaft 102L is drive in the Y direction, the lens chuck shaft 102L presses the side wall of the long hole 76b of the rotating plate 76, such that the rotating plate 76 is rotated along with the movement in the Y direction of the lens chuck shaft 102L.

At this time, the sliding plate 77 (dotted line part) disposed on the guide 76b of the rotating plate 76 is also rotated along with the rotation of the rotating plate 76, and thus the angle of the sliding plate 77 is changed due to driving in the Y direction of the lens chuck shaft 102L. Due to the position of the lens chuck shaft 102L, the sliding plate 77 is in a range of the longitudinal direction of the long hole 76b and moves along the guide 76a. The sliding plate 77 moves while changing its angle in synchronization with the rotation of the rotating plate 76, thereby always blocking the long hole 76b. For example, as illustrated in Figs. 10(a) to 10(c), the sliding plate 77 moves while changing its angle at each position of the lens chuck shaft 102L when the lens chuck shaft 102L is elevated along the long hole 75L. Accordingly, the long hole 76b of the rotating plate 76 is in a state of being always blocked.

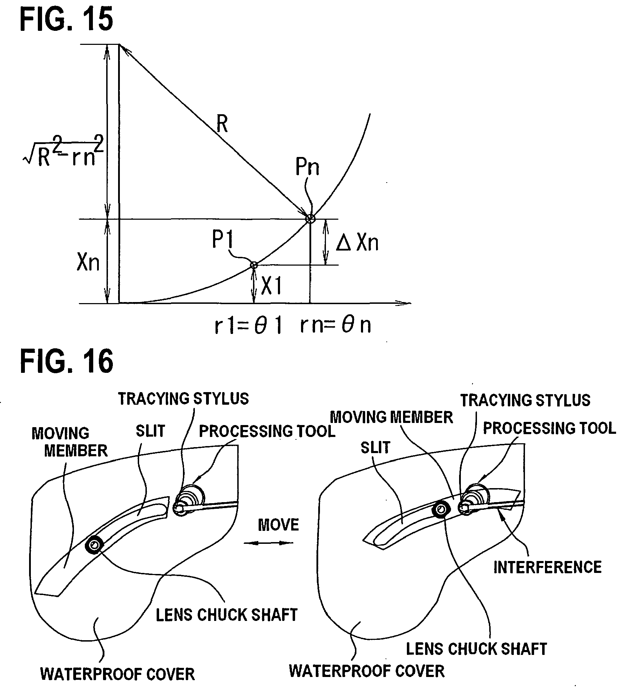

As described above, by employing the configuration in which the rotating plate 76 of the shield unit 70 has rotational movement and by providing the long hole 76b and the sliding plate 77, the constituent members of the shield unit 70 do not move on the movement path in the Y direction of the lens chuck shaft. That is, the shield unit 70 does not have the same movement as the arc movement of the lens chuck shafts 102L and 102R as in the related art (see Fig. 16) but has movement due to the rotational movement, and thus interference with the members (for example, the second lens processing tool 400) other than the rotating plate 76 does not occur.

Therefore, even in a case where a driving range in the Y direction of the lens chuck shaft is large, the shield unit 70 may be prevented from interfering with other members. Accordingly, the degree of freedom is added to the arrangement of the members, and a space-saving arrangement of the members is possible. In this example, since the interference with the second lens processing tool 400 is able to be prevented, the rotating shaft 400a of the second lens processing tool 400 is able to be fixed to protrude from the waterproof cover 61 (disposed to be non-retractable).

<Control Section>

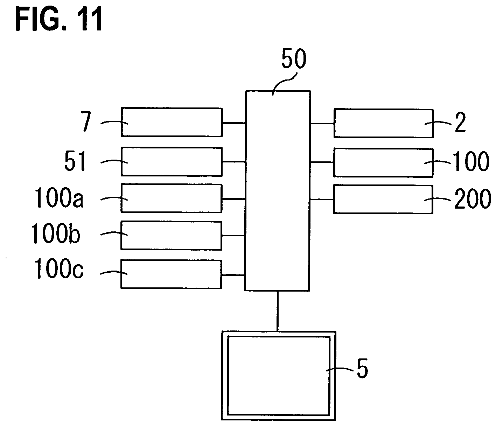

Fig. 11 is a control block diagram of an apparatus for processing an eyeglass lens periphery. A switch section 7, a memory 51, a carriage section 100, the lens shape measuring unit 200, touch panel-type displaying means, a display 5 as inputting means, and the like are connected to a control section 50. The control section 50 receives an input signal through a touch panel function included in the display 5 and controls a display of figures and information of the display 5. Here, an eyeglass frame shape measuring section 2 (those described in JP-A-4-93164 and the like may be used) is connected to the apparatus for processing an eyeglass lens periphery so that predictive control is performed during lens shape measurement based on target lens shape data acquired by the eyeglass frame shape measuring section 2.

<Control Operation>

The operations of the eyeglass lens processing apparatus having the above configuration will be described. In this embodiment, during measurement of the shape of the lens LE, the control section 50 controls driving of the lens rotating unit 100a and the Y-direction moving unit 100c based on the target lens shape input from the eyeglass frame shape measuring section 2 or the like, and controls driving of the X-direction moving unit 100b based on at least one of the curve of a lens refractive surface before starting measurement, the detection result obtained by the sensor 257 after starting the measurement, and the target lens shape so that the movement position in the lens chuck shaft direction of the tracing stylus 260 during the measurement of the lens shape is in a predetermined range.

First, when the periphery of the lens is processed, target lens shape data (radial length rn and radial angle $\theta n$) (n=1, 2, ..., N) obtained by the eyeglass frame shape measuring section 2 is input, and layout data such as a pupillary distance (PD value) of a wearer, a frame pupillary distance (FPD value) of eyeglass frames and, the height of an optical center with respect to the geometric center of the target lens shape is input by operating the keys of the display 5. Processing conditions such as the material of a lens, the type of a frame, and processing modes (bevel-processing, plano-processing, and grooving) are set by operating the keys of the display 5.

When inputting of data needed for processing is completed, the lens LE is held by the lens chuck shafts 102R and 102L, and an operation is started by pushing a start switch of the switch section 7. The control section 50 controls driving of the motor 120 to cause the lens LE to make at least one revolution and measures the shape of the refractive surface of the lens LE at every predetermined angle $\Delta\theta$. For example, based on the target lens shape data measured by the eyeglass frame shape measuring section 2, an angle between measurement points is set to $\Delta\theta$=0.36 degrees, and 1000 points of measurement data are obtained through the one revolution of the lens LE.

The control section 50 moves the carriage 101 in the upward and downward direction (Y direction) to change the axis-to-axis distance between the tracing stylus 260 and the lens chuck shafts 102R and 102L based on the radial data of the input target lens shape and the processing shape calculated from the layout data and aligns the measurement start position of the front surface of the lens LE and the position of the tracing stylus 260 (the tip end 260a).

The carriage 101 is moved in the X direction by driving the X-direction moving unit 100b so that the measurement start point P1 of the refractive surface of the lens LE contacts the tip end 260a of the tracing stylus 260. After the tracing stylus 260 contacts the lens LE (the front surface), the lens LE is further moved in the X direction so that the support shaft 263 (the holding unit 250c) is tilted at a predetermined tilt angle about the axis S2 as the center. For example, at the measurement start point P1, when the support shaft 263 is tilted at an angle $\alpha$1 (for example, of 2 degrees) from the initial position, the tracing stylus 260 is moved in the X direction by about 4 mm.

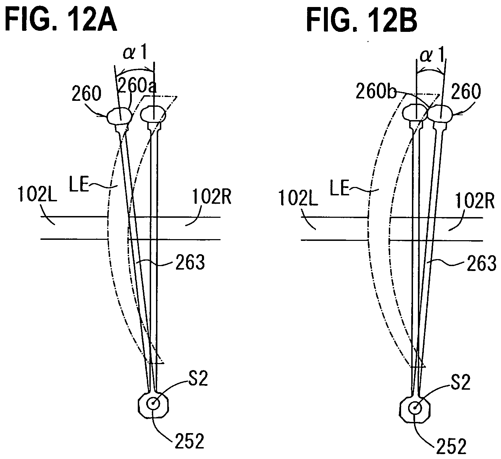

In Fig. 12, a state where the lens shape measuring unit 200 is tilted at a predetermined angle by contacting the lens LE. As illustrated in Fig. 12(a), after the lens LE and the tracing stylus 260 contact each other, when the support shaft 263 is further tilted by an angle $\alpha$1 from the initial position about the axis S2, repulsion of the spring 254a occurs, and the tracing stylus 260 comes into pressing contact with the measurement surface of the lens LE. Accordingly, even though a distance from the lens chuck shafts 102R and 102L to each measurement point is changed, the tracing stylus 260 follows the measurement point on the refractive surface of the lens LE by the impelling of the spring 254a (254b).

When a tilt of the support shaft 263 at a predetermined angle in the X direction about the axis S2 as the center is detected by the sensor 257, the control section 50 acquires position information X1 in the X direction of the front surface of the lens LE at the measurement start point P1 based on the detection results of the encoder 146 and the sensor 257.

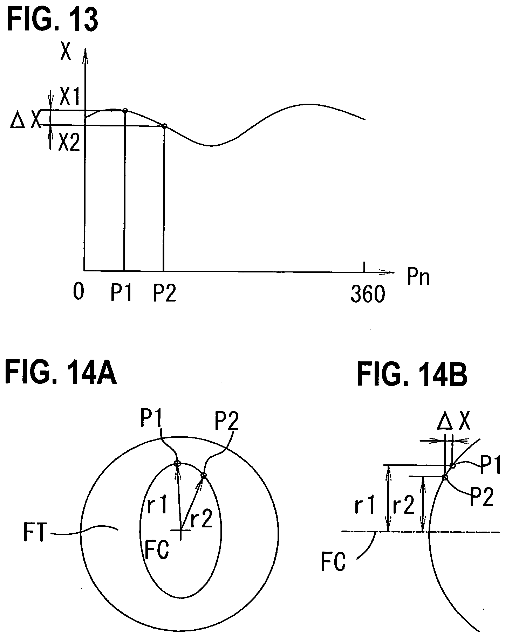

Here, Fig. 13 is an explanatory view of a change in the position in the measurement surface of the lens LE for each lens rotational angle. When position information X1 is obtained at the measurement start point P1, the control section 50 rotates the lens LE using the lens rotating unit 100a in a predetermined step and aligns the positions of the next measurement point P2 and the tracing stylus 260. As described above, the tip ends 260a and 260b of the tracing stylus 260 have roundness and thus are smoothly moved on the refractive surface of the lens LE.

Also at the next measurement point P2, position information X2 in the X direction of the front surface of the lens LE is acquired in the same manner. However, when a distance from the axis of the lens chuck shafts 102R and 102L to a measurement point Pn (n=1, 2, ..., 1000) is changed depending on the target lens shape, the position in the X direction of the refractive surface of the lens LE is shifted such that a contact state of the lens LE against the tracing stylus 260 is changed.

Figs. 14A and 14B is an explanatory view a change in the position of the refractive surface of the lens LE according to a change in the distance from the rotation center to each measurement point Pn (n=1, 2, ...), Fig. 14A is a front view of the lens LE, and Fig. 14B is a side view of the lens LE. For example, with respect to the position X1 of the measurement surface of the lens LE at the measurement point P1 at a distance r1 from the rotation center FC, at the measurement point P2 at a distance r2 from the rotation center, the position of the measurement surface of the lens LE is X2, which is shifted in the X direction by $\Delta X$.

As such, when the measurement surface of the lens LE is shifted in the X direction and the tracing stylus 260 comes into stronger pressing contact with the lens LE, there is a concern of the lens LE coming into pressing contact over the tiltable range of the tracing stylus 260, resulting in damage of the measurement surface. When the measurement surface of the lens LE is moved in a direction to be from the tracing stylus 260, there is a concern that a force of coming into pressing contact with the lens LE is weakened and the tracing stylus 260 may deviate from the measurement surface.

Here, according to the invention, in order to measure a lens shape while maintaining a state of contact between the tracing stylus 260 and the lens LE in a predetermined range (that is, to cause a movement position in the X direction of the tracing stylus 260 to be in a predetermined range), the control section 50 performs predictive control for predicting the position of the measurement surface of the lens LE at the next measurement point Pn (the next rotational angle of the lens).

For example, the control section 50 predicts the position of the refractive surface of the lens LE at the next measurement point P3 (the next rotational angle of the lens) based on the position information X in the X direction of the refractive surface of the lens LE at the measurement start point P1 and the measurement result of the position information X2 at the next measurement point P2. First, the control section 50 obtains a difference

$\Delta X$ between the position information X1 obtained at the measurement start point P1 and the position information X2 obtained at the next measurement point P2. As a result of performing a predetermined calculation based on the difference $\Delta X$ at the next measurement point P3, the control section 50 performs control so that the carriage 101 is moved in the opposite direction (in a direction to offset the $\Delta X$) and thus the contact state of the lens LE against the tracing stylus 260 is maintained in a constant state. That is, the control section 50 controls driving of the X-direction moving unit 100b so that the tracing stylus 260 is located at a fixed position in the axial direction of the lens chuck shafts 102R and 102L at each rotational angle of the lens based on the measurement result obtained after starting measurement. In this manner, a change in the position in the X direction of the tracing stylus 260 is reduced, and thus measurement of the shape of the refractive surface of the lens LE is appropriately performed. Control to cause the tracing stylus 260 at each rotational angle of the lens to be located at fixed position is preferable, and the present invention is not limited thereto. When the movement position of the tracing stylus 260 in the X direction is in a predetermined range, the movement position of the tracing stylus 260 (the measurement position of the refractive surface of the lens) may be mathematically operated based on the detection result of the sensor 257 at each rotational angle of the lens.

When a change in the position of the tracing stylus 260 (the tip end 260a) acquired by the sensor 257 is used as a correction value for position information of the lens refractive surface at the measurement point, an influence of a minute change in the tilt angle of the tracing stylus 260 is eliminated, thereby obtaining the refractive surface shape of the lens LE with higher accuracy. For example, by adding a correction of $\Delta(Xn-\Delta X_{n-1})$ to position information Xn at a measurement point Pn, a movement error in a tilt angle range of the tracing stylus 260 is offset.

Hereinabove, a control method of predicting the position of the refractive surface at a measurement point of the next lens rotational angle based on the measurement results of the shape of the refractive surface at the two premeasured points including the measurement point $P_{n-1}$ and the measurement point $P_{n-2}$ with respect to the current measurement point Pn of the refractive surface of the lens LE as a reference has been described. Besides, an average $\Delta X$ of changes in the position of the refractive surface at a plurality of premeasured points m (m=2, 3, 4, ...) may be obtained, the position in the X direction of the refractive surface at the current measurement point Pn may be predicted based on the value of the obtained average $\Delta X$, and the position in the X direction of the lens LE may be controlled. A calculation expression for obtaining the average $\Delta X$ is shown in Expression (1).

Expression 1

$$\Delta X = \sum_{n=1}^{m} \frac{1}{n}(X_n - X_{(n-1)}) \quad \dots \text{Expression (1)}$$

A case where the tracing stylus 260 deviates from the refractive surface of the lens LE by mistake during measurement of the shape of the refractive surface may be considered. Here, the deviation of the tracing stylus 260 from the measurement surface is detected from a change in the position in the H direction (a change in the tilt angle) by the sensor 258. That is, when the tracing stylus 260 deviates from the measurement surface of the lens LE, the tracing stylus 260 is returned to its initial position in the Y direction by the restoring force of the spring 204. Otherwise, the position in the H direction is significantly changed. Such a movement in the H direction of the tracing stylus 260 (a change in position) before completing measurement is detected by the sensor 258, the control section 50 determines that the tracing stylus 260 deviates from the measurement surface of the lens LE and performs control so that the operation of measuring the shape of the refractive surface of the lens LE is temporarily stopped and measurement is performed again.

When measurement of the shape of the refractive surface of the front surface side of the lens LE is completed, the lens LE is moved in a direction to be separated from the tracing stylus 260 due to the movement of the carriage 101 by the motor 145. When the lens LE is separated from the tracing stylus 260, the tracing stylus 260 is returned to its initial position by the restoring force of the spring 203.

After the measurement of the shape of the refractive surface of the front surface of the lens LE is completed, roughing is performed on the periphery of the lens LE. In this case, even when the curve of the rear surface of the lens LE is sharp, measurement of the shape of the refractive surface is appropriately performed without an increase in the size of the tracing stylus 260. A more compact roughing grindstone may be achieved. In this example, as lens processing, grooving is exemplified for the description. As a matter of course, as periphery processing, bevel-processing, polishing, and the like may be performed.

The control section 50 moves the carriage 101 in the XY directions by driving the motors 145 and 150 to position the lens LE on the lens processing tool 168. Roughing of the periphery of the lens LE is performed by causing the lens LE rotated by driving of the motor 120 to come into pressing contact with the lens processing tool 168 rotated along the rotation of the grindstone spindle 161a by the motor 160.

When roughing of the lens LE is completed, the control section 50 moves the carriage 101 toward the lens shape measuring unit 200 again and aligns the positions of the measurement start point of the rear surface of the lens LE and the tip end 260b of the tracing stylus 260. The control section 50 causes the tip end 260b of the tracing stylus 260 to come into pressing contact with the rear surface of the lens LE until the support shaft 263 is tilted at a predetermined tilt angle α1 about the axis S2 as the center as illustrated in Fig. 12(b) by the movement in the X direction of the carriage 101 as described above, and performs measurement of the shape of the rear surface side of the lens LE based on the predictive control as described above. Here, since roughing is performed on the periphery of the lens in advance, the movable unit 250 and the lens LE are less likely to interfere with each other, and thus shape measurement is more appropriately performed.

When measurement of the shape of the refractive surface of the front and rear surfaces of the lens LE is completed, the thickness of the edge of the lens LE is obtained from the shapes of the refractive surfaces of the front and rear surfaces of the measured lens LE. The control section 50 performs finishing (plano-processing) on the lens LE that comes into pressing contact with the first lens processing tool 168 based on the calculated shape data of the lens edge.

The control section 50 moves the carriage 101 in the XY direction by driving the motor 145 and the motor 150, and positions the lens LE on the finishing grindstone 164 disposed in the first lens processing tool 168. The lens LE rotated by driving of the motor 120 comes into pressing contact with the first lens processing tool 168 rotated by the rotation of the processing tool rotating shaft 161a by the motor 160, and finishing is performed on the periphery of the lens LE.

When finishing is completed, the control section 50 obtains grooving data (control data for rotation and XY movement of the lens chuck shafts) based on the target lens shape and the shape data of the lens edge, and grooving is performed based on the grooving data. The control section 50 moves the carriage 101 in the XY direction by driving the motor 145 and the motor 150 and positions the lens LE on the second lens processing tool 400. The lens LE rotated by driving of the motor 120 comes into pressing contact with the grooving grindstone 432 of the second lens processing tool 400 rotated by the rotation of the grindstone rotating shaft 425 by the motor 421, and grooving is performed on the periphery of the lens LE.

Next, the control section 50 obtains chamfering data (control data for rotation and XY movement of the lens chuck shafts) based on the target lens shape and the shape data of the lens edge, and chamfering is performed based on the obtained processing data. The control section 50 moves the carriage 101 in the XY direction by driving the motor 145 and the motor 150 and positions the lens LE on the second lens processing tool 400. The lens LE rotated by driving of the motor 120 comes into pressing contact with the chamfering grindstone 431 of the second lens processing tool 400 rotated by the rotation of the grindstone rotating shaft 425 by the motor 421, and chamfering is performed on the periphery of the lens LE.

The predictive control method for measuring the shape of the refractive surface of the lens LE while maintaining the position (the tilt angle) of the tracing stylus 260 in a predetermined range is not limited to the above description.

For example, during predictive control using the above-described average, an average of the latest (for example, 5) measurement points of the current measurement point Pn may also be used as a correction value. That is, in a case where the position of the measurement point is significantly changed on the refractive surface (the distance from the lens chuck shafts 102R and 102L is significantly changed), such as a case where the lens curve is sharp, the difference between the predicted value of the average and the actual position of the refractive surface of the lens LE is increased, and thus there is a concern of the tracing stylus 260 deviating.

Here, an average of the latest measurement points (for example, an average of the latest 5 measurement values) may be reflected in the above-described average as a correction value. In this case, even when a change amount of the average is great, the position of the current measurement point may be predicted with good accuracy.

Whether or not correction using the average of the latest measurement points is reflected may be determined by the control section 50 based on a predetermined threshold. For example, in a case where the value of the average is greater than the predetermined threshold, predictive control using the correction value of the average of the latest measurement points may be performed.

For the predictive control, a movement amount (the tilt angle) of the tracing stylus 260 may also be used. For example, when the sensor 257 detects that the tracing stylus 260 is moved by a predetermined distance $\Delta$XD (for example, of $\pm$2 mm or longer in the X direction from the measurement start position) in the X direction, the control section 50 performs control so that the lens LE (the lens chuck shafts 102R and 102L) is moved by the distance $\Delta$XD in the X direction.

Moreover, the X-direction moving unit 100b may be controlled so that the moving position of the tracing stylus 260 falls within a predetermined range in the X-direction based on the curve information of the refractive surface of eh lens obtained in advance before starting the measurement by the lens shape measuring unit 200. For example, a lens curve value may be predicted based on target lens shape data input in advance and position control of the lens LE with respect to the tracing stylus 260 may be performed based on the predicted lens curve value. Fig. 15 is an explanatory view of a modified example of the predictive control.

First, the control section 50 aligns the position of the tracing stylus 260 with the initial first point of the refractive surface of the lens LE as described above, and thereafter predicts a lens curve value from a change in the tilt amount of the tracing stylus 260 detected by the sensor 257 by causing the tracing stylus 260 to slide on the refractive surface to a second point separated by a predetermined distance in the radial direction in a state where the tracing stylus 260 contacts the surface of the lens LE.

For example, the control section 50 causes the tracing stylus 260 to slide outward to the second point at a predetermined distance (for example, about 0.5 mm) in the radial direction from a state of being aligned with the first point of the position on the lens corresponding to the target lens shape acquired in advance, and obtains a change in the tilt amount of the lens surface. When measurement of the lens curve value is performed at the position according to the target lens shape, an influence of the spherical surface state of the lens is suppressed, and the lens curve value is predicted with good accuracy. In order to obtain the lens curve value, two points having different distances at least in the radial direction may be measured. In a case where the lens curve value of the lens refractive surface is obtained in advance by measuring design data of the lens or the sum of curves, a configuration in which the lens curve value is input by a switch of the display 5 may also be employed. Furthermore, a representative value (standard value) of a lens curve stored in advance in the memory 51 may also be used.

When the lens curve value is acquired as described above, a measurement position Xn of the lens surface at the measurement point Pn is obtained based on Expression (2). In Fig. 10, the relationship between the radius R of the lens curve, the radial angle $\theta$n at the measurement point Pn, and the radial length rn is illustrated.

Expression 2

$$X_n = R - \sqrt{R^2 - r_n^2} \ \dots \text{Expression (2)}$$

Here, the movement distance $\Delta$Xn in the X direction of the measurement position Xn of the measurement point Pn with respect to the measurement position X1 at the initial measurement position P1 is obtained by Expression (3).

Expression 3

$$\Delta X_n = X_n - X_1 \dots \text{Expression (3)}$$

The control section 50 moves the carriage 101 (the lens chuck shafts 102R and 102L) in the X direction based on the calculated movement distance $\Delta$Xn while rotating the lens LE according to the radial data (rn, $\theta$n) so as to cause the lens LE to contact the tracing stylus 260 in a constant state and performs measurement of the shape of the refractive surface of the lens.

Here, in a case where a difference of a predetermined or greater value is present between the actual measurement position of the refractive surface of the lens LE and the position of the refractive surface of the lens LE predicted based on the lens curve value, control for correcting the lens curve value may also be performed by the control section 50. For example, when a predetermined difference between the actual measurement point of the lens LE and the predicted value is detected from the detection result (a change in the tilt angle of the tracing stylus 260) by the sensor 257, the control section 50 resets the lens curve value using the shape measurement data of the measured lens. Otherwise, the lens curve value is obtained again by causing the tracing stylus 260 to slide in the radial direction on the refractive surface of the lens LE again. Predictive control as described above is performed based on the newly set lens curve value such that the lens LE contacts the tracing stylus 260 in a constant state.

Particularly, in a case where lens processing is performed while holding the geometric center of the target lens shape with the lens chuck shafts, the lens LE is likely to be tilted due to a change in the rotational angle of the lens LE. In this case, the correction process of the lens curve value as described above is performed so that lens shape measurement is appropriately continued.

As described above, deviation of the lens LE from the tracing stylus 260 may be predicted by performing measurement of the shape of the lens LE while predicting the position of the measurement point (the position in the X direction) on the refractive surface of the lens LE. Therefore, even in a case where the movable range of the tracing stylus 260 is narrow, the shape of the refractive surface of the lens LE is appropriately measured.

Even though a processing tool retracting mechanism is not provided as avoiding means, the second lens processing tool 400 may be prevented from interfering with the lens shape measuring unit 200 or the first lens processing tool 168. For example, since the second lens processing tool 400 is disposed to oppose the first lens processing tool 168 with the carriage 101 interposed therebetween, when lens processing is performed by the first lens processing tool 168, the second lens processing tool 400 may not be avoided so as not to interfere with the lens LE and the second lens processing tool 400. That is, there is no need to provide avoiding means for avoiding the second lens processing tool 400. By narrowing the movable range of the tracing stylus 260, when lens shape measurement is performed by the lens shape measuring unit 200, the avoiding means for avoiding the second lens processing tool 400 so as to prevent the second lens processing tool 400 from interfering with the lens LE is not necessary. As such, the second lens processing tool 400 may be disposed to be fixed, and thus it is possible to prevent wobbling and the like of the second lens processing tool 400 during processing, resulting in enhancement in the accuracy of processing.

Moreover, a space in the X direction between the second lens processing tool 400 and the lens shape measuring unit 200 that are arranged in parallel may be reduced, resulting in reduction in the size of the apparatus.

In this example, an avoiding means for avoiding the lens shape measuring unit 200 when processing is performed by the second lens processing tool 400 is not provided. As such, the lens shape measuring unit 200 is disposed to be fixed, and thus it is possible to prevent wobbling and the like of the tracing stylus 260 during lens shape measurement, resulting in enhancement in the accuracy of measurement.

By using the above configuration, measurement of the shape of the external form of the lens LE may be performed. In this case, the control section 50 causes the tip end surface 260c of the tracing stylus 260 to abut on the edge of the lens LE by driving the carriage 101. It is preferable that the tip end surface 260c have such a width that the edge of the lens LE does not easily deviate.

The control section 50 moves the carriage 101 in the forward, rearward, leftward, and rightward directions in the state where the edge of the lens LE abuts on the tip end surface 260c based on the data of the target lent shape input in advance so that the edge of the lens LE contacts the tip end surface 260c at a constant pressure. Here, it is preferable that the position of the edge be predicted using the next measurement point through the predictive control as described above. In this manner, the lens LE may be avoided from deviating from the tracing stylus 260, and thus measurement of the position of the edge of the lens LE is appropriately performed.

In the above description, the example in which the tracing stylus 260 is attached to the tip end of the arm 262 provided in a direction that extends toward the lens chuck shafts 102R and 102L is described. Besides, the tracing stylus 260 may also be provided at the tip end of an arm that extends in a direction parallel to the lens chuck shafts 102R and 102L. Alternatively, the tracing stylus 260 may also be provided at a position at which both the front and rear surfaces of the lens are able to be measured using the single tracing stylus 260. Otherwise, as in JP-A-2000-317796, a configuration in which the tip end 260a and the tip end 260b oppose each other may also be employed.

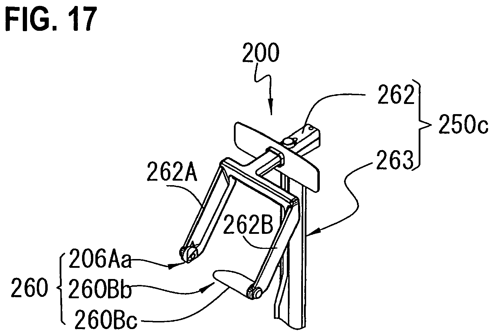

Fig. 17 is a configuration example thereof. In the example of Fig. 17, the tip end direction (a direction in which the lens chuck shafts 102R and 102L are positioned) of the arm 262 attached on the support shaft 263 is formed in a further U-shaped arm (a first front arm 262A and a second front arm 262B). The tracing stylus 260 configured to contact the front refractive surface of the lens LE has a tracing stylus 260Aa configured to contact the front refractive surface of the lens LE and a tracing stylus 260Bb configured to contact the rear refractive surface of the lens LE. The tracing stylus 260Aa is provided in the first front arm 262A. The tracing stylus 260Bb is attached to the second front arm 262B. The tip end of the tracing stylus 260Aa and the tip end of the tracing stylus tip end 260Bb oppose and face each other. During measurement, the lens LE is disposed between the tracing stylus 260Aa and the tracing stylus 260Bb. A side surface 260Bc of the tracing stylus 260Bb is used as a part configured to contact the peripheral surface of the lens LE. The configuration other than the arm 262 to which the tracing stylus 260 is attached is the same as that in Fig. 2, and thus illustration and description thereof will be omitted.

Furthermore, in the above description, the positional relationship between the tracing stylus 260 and the lens LE is acquired by detecting a change in the tilt angle of the holding unit 250c that occurs when the tracing stylus 260 contacts the lens LE by using the sensors 257 and 258.

In the above description, after measuring the shape of the front surface of the lens LE, measurement of the shape of the rear surface side of the lens LE is performed after performing roughing. However, in a case where the shape of the roughing grindstone is allowed to be sufficiently large, in a case where the lengths of the tip ends 260a and 260b of the lens shape measuring unit 200 are ensured, or in a case of the lens shape measuring unit 200 of Fig. 17, roughing may be started after initially performing measurement of the shapes of the front and rear surfaces of the lens LE.

As described above, since the moving mechanism of the tracing stylus 260 in the X direction (the axial direction of the lens chuck shafts 102R and 102L) is configured as the rotating mechanisms (the shaft 252 and the bearing 261) about the axis S2, dust is less likely to infiltrate thereto compared to the linear motion mechanism (a mechanism such as a guide rail that extends linearly) in the apparatus according to the related art, thereby realizing smooth movement of the tracing stylus 260 for a long term. The configuration of the moving mechanism is simplified compared to the linear motion mechanism.

During measurement of the shape of the refractive surface of the lens, the X-direction moving mechanism of the lens chuck shafts 102R and 102L is used. Therefore, the movable range of the tracing stylus 260 in the X direction may be reduced, and thus the rotating mechanism and measurement with good accuracy may be realized while reducing the size of the apparatus.

In this configuration, the processing tool for chamfering or grooving may be disposed to be fixed in parallel to the tracing stylus 260 of the lens shape measuring mechanism without increasing the size of the apparatus. Therefore, a processing tool refracting mechanism is not provided, thereby suppressing degradation in processing accuracy due to "wobbling" of the processing tool during processing of the lens.

**Claims**

1. An eyeglass lens processing apparatus comprising:

 lens rotating means (100a) for rotating a lens chuck shaft (102L, 102R) that holds an eyeglass lens;
 first moving means (100b) for moving the lens chuck shaft in a direction of a first axis (X) of the lens chuck shaft;
 processing tool rotating means (300, 420) for rotating a processing tool rotating shaft (161a, 400a) to which a periphery processing tool that processes a periphery of the lens is attached; and
 lens shape measuring means (200) for measuring a shape of a refractive surface of the lens held by the lens chuck shaft, the lens shape measuring means including a tracing stylus (260) configured to contact the refractive surface of the lens;
 second moving means (100c) for relatively moving the lens chuck shaft in a direction in which an axis-to-axis distance between the lens chuck shaft and the tracing stylus is changed; and
 control means (50) for controlling the first and second moving means;
 wherein the control means (50) controls the first and second moving means to cause the tracing stylus (260) to contact the refractive surface of the lens and thereafter controls the lens rotating means (100a) and the second moving means (100c) based on a target lens shape and control the lens shape measuring means (200) to measure a shape of the refractive surface of the lens, and obtain the shape of the refractive surface of the lens based on a detection result of the first sensor, **characterized in that**,
 the lens shape measuring means (200) includes a holding unit (250c) which is configured to hold the tracing stylus (260) and the tracing stylus (260) is configured to be tilted toward the first axis (X) around a second axis (S2) perpendicular to the first axis (X), and a first sensor (257) for detecting tilt of the holding unit,
 wherein the control means (50) controls the first moving means (100b), during lens shape measurement, so that the moving position of the tracing stylus (260) falls within a predetermined range in the direction of the first axis (X-direction) such that the tracing stylus (260) and the lens maintain a state of contact, the predetermined range being based on curve information of the refractive surface of the lens obtained before starting the measurement by the lens shape measuring means (200) or the measurement result obtained after starting the measurement by the lens shape measuring means (200).

**2.** The eyeglass lens processing apparatus according to claim 1, wherein
the controlling means (50) predicts the shape of the refractive surface of the lens in the direction of the first axis (X) at each rotational angle of the lens based on the measurement result obtained after starting the measurement by the lens shape measuring means (200), and controls the first moving means (100b) based on the prediction result.

**3.** The eyeglass lens processing apparatus according to any one of claims 1 to 2, wherein
the control means (50) controls the first moving means (100b) so that the tracing stylus (260) is located at a fixed position in the direction of the first axis (X) at each rotational angle of the lens.

**4.** The eyeglass lens processing apparatus according to any one of claims 1 to 3, wherein
the control means (50) obtains the shape of the refractive surface of the lens corresponding to the target lens shape at each rotational angle of the lens based on the detection result of the first sensor (257) and the movement position of the lens chuck shaft moved by the first moving means (100b).

**5.** The eyeglass lens processing apparatus according to any one of claims 1 to 4, wherein
the processing tool rotating means includes first processing tool rotating means (300) for rotating a first processing tool rotating shaft (161a) to which a first processing tool (168) for processing a periphery of the lens is attached, and second processing tool rotating means (420) for rotating a second processing tool rotating shaft (400a) to which a second processing tool for performing at least one of grooving and chamfering the periphery of the lens subjected to finishing, and
the first and second processing tools are arranged so as to interpose the lens chuck shaft between the first and second processing tools,
the second processing tool is disposed side by side with the tracing stylus (260), and
the second processing tool is located outside a movement range of the tracing stylus (260) in the direction of the first axis (X).

**6.** The eyeglass lens processing apparatus according to claim 5, wherein
the second moving means (100c) moves the lens chuck shaft in the direction in which the axis-to-axis distance between the lens chuck shaft and the tracing stylus (260) is changed,
the second moving means (100c) includes axis-to-axis distance changing means for moving the lens chuck shaft in a second direction in which an axis-to-axis distance between the lens chuck shaft and the first processing tool rotating shaft is changed,

a first position of the second processing tool which is closest to the lens chuck shaft in the second direction and a second position of the tracing stylus (260) which is closest to the lens chuck shaft in the second direction are arranged to be in a predetermined distance, wherein
the predetermined distance is a distance which is a difference between a minimum processing diameter where the periphery of the lens held by the lens chuck shaft is able to be processed, and an outside diameter of the lens chuck shaft or an outside diameter of a holding member attached to the lens chuck shaft.

**Patentansprüche**

**1.** Brillenlinsenbearbeitungsvorrichtung umfassend:

ein Linsendrehmittel (100a) zum Drehen einer Linsenspannwelle (102L, 102R), die eine Brillenglaslinse hält;
ein erstes Bewegungsmittel (100b) zum Bewegen der Linsenspannwelle in einer Richtung einer ersten Achse (X) der Linsenspannwelle;
ein Bearbeitungswerkzeugdrehmittel (300, 420) zum Drehen einer Bearbeitungswerkzeugdrehwelle (161a, 400a), mit der ein peripheres Bearbeitungswerkzeug, das eine Peripherie der Linse bearbeitet, verbunden ist; und
ein Linsenform-Messmittel (200) zum Messen einer Form einer lichtbrechenden Oberfläche der von der Linsenspannwelle gehaltenen Linse, wobei das Linsenform-Messmittel einen Detektionsstift (260) umfasst, der zum Berühren der lichtbrechenden Oberfläche der Linse eingerichtet ist;
ein zweites Bewegungsmittel (100c) zum relativen Bewegen der Linsenspannwelle in einer Richtung, in der ein Achse-zur-Achse-Abstand zwischen der Linsenspannwelle und dem Detektionsstift geändert wird; und
ein Steuerungsmittel (50) zum Steuern des ersten und zweiten Bewegungsmittels;
wobei das Steuerungsmittel (50) das erste und zweite Bewegungsmittel zum Verursachen eines Berührens des Detektionsstifts (260) mit der lichtbrechenden Oberfläche der Linse steuert, und danach das Linsendrehmittel (100a) und das zweite Bewegungsmittel (100c) basierend auf einer Ziellinsenform steuert, und das Linsenform-Messmittel (200) zum Messen einer Form der lichtbrechenden Oberfläche der Linse steuert, und die Form der lichtbrechenden Oberfläche der Linse basierend auf einem Detektionsergebnis des ersten Sensors erhält,
**dadurch gekennzeichnet, dass**
das Linsenformmessmittel (200) eine Halteeinheit (250c), die zum Halten des Detektionsstifts (260) eingerichtet ist, und der Detektionsstift (260) eingerichtet ist, zu der ersten Achse (X) um eine zweite Achse (S2) senkrecht zur ersten Achse (X) geneigt zu werden, und einen ersten Sensor (257) zum Detektieren der Neigung der Halteeinheit umfasst,

wobei das Steuerungsmittel (50) das erste Bewegungsmittel (100b) steuert, während des Linsenformmessens, damit sich die Bewegungsposition des Detektionsstifts (260) innerhalb eines vorgegebenen Bereichs in der Richtung der ersten Achse (X-Richtung) befindet, so dass der Detektionsstift (260) und die Linse einen Berührungszustand behalten, wobei der vorgegebene Bereich basierend auf entweder der vor dem Starten des Messens von dem Linsenformmessmittel (200) erhaltenen Kurveninformation der lichtbrechenden Oberfläche der Linse oder dem nach dem Starten des Messens von dem Linsenformmessmittel (200) erhaltenen Messergebnis.

2. Brillenlinsenbearbeitungsvorrichtung nach Anspruch 1, wobei

das Steuerungsmittel (50) die Form der lichtbrechenden Oberfläche der Linse in der Richtung der ersten Achse (X) an jedem rotierenden Winkel der Linse basierend auf dem nach dem Starten des Messens von dem Linsenformmessmittel (200) erhaltenen Messergebnis vorhersagt, und das erste Bewegungsmittel (100b) basierend auf dem Vorhersageergebnis steuert.

3. Brillenlinsenbearbeitungsvorrichtung nach einem der Ansprüche 1 bis 2, wobei

das Steuerungsmittel (50) das erste Bewegungsmittel (100b) steuert, so dass der Detektionsstift (260) an einer festgelegten Position in der Richtung der ersten Achse (X) an jedem rotierenden Winkel angeordnet ist.

4. Brillenlinsenbearbeitungsvorrichtung nach einem der Ansprüche 1 bis 3, wobei

das Steuerungsmittel (50) die Form der lichtbrechenden Oberfläche der Linse entsprechend der Ziellinsenform an jedem rotierenden Winkel der Linse basierend auf dem Detektionsergebnis des ersten Sensors (257) und der Bewegungsposition der von dem ersten Bewegungsmittel (100b) bewogenen Linsenspannwelle erhält.

5. Brillenlinsenbearbeitungsvorrichtung nach einem der Ansprüche 1 bis 4, wobei das Bearbeitungswerkzeugdrehmittel das erste Bearbeitungswerkzeugdrehmittel (300) zum Drehen einer ersten Bearbeitungswerkzeugdrehwelle (161a), mit der ein erstes Bearbeitungswerkzeug (168) zum Bearbeiten einer Peripherie der Linse verbunden ist, und das zweite Bearbeitungswerkzeugdrehmittel (420) zum Drehen einer zweiten Bearbeitungswerkzeugdrehwelle (400a), mit der ein zweites Bearbeitungswerkzeug zum Durchführen von mindesten einem von Rillen und Anfasen der Peripherie der Linse in Abhängigkeit von einer Fertigstellung umfasst, und

das erste und zweite Bearbeitungswerkzeug derart angeordnet ist, dass die Linsenspannwelle zwischen dem ersten und zweiten Bearbeitungswerkzeug zwischengeschaltet ist,

das zweite Bearbeitungswerkzeug Seite-an-Seite mit dem Detektionsstift (260) angeordnet ist, und das zweite Bearbeitungswerkzeug außerhalb eines Bewegungsbereichs des Detektionsstifts (260) in der Richtung der ersten Achse (X) angeordnet ist.

6. Brillenlinsenbearbeitungsvorrichtung nach Anspruch 5, wobei das zweite Bewegungsmittel (100c) die Linsenspannwelle in der Richtung, in der der Achse-zur-Achse-Abstand zwischen der Linsenspannwelle und dem Detektionsstift (260) geändert wird, bewegt,

das zweite Bewegungsmittel (100c) ein Achse-zur-Achse-Abstandänderungsmittel zum Bewegen der Linsenspannwelle in einer zweiten Richtung, in der ein Achse-zur-Achse-Abstand zwischen der Linsenspannwelle und der ersten Bearbeitungswerkzeugdrehwelle geändert wird, umfasst,

eine erste Position des zweiten Bearbeitungswerkzeugs, die am nächsten von der Linsenspannwelle in der zweiten Richtung ist, und eine zweite Position des Detektionsstifts (260), die am nächsten von der Linsenspannwelle in der zweiten Richtung ist, in einem vorbestimmten Abstand angeordnet sind,

wobei der vorbestimmte Abstand ein Abstand ist, der ein Unterschied zwischen einem minimalen Bearbeitungsdurchmesser, bei dem die von der Linsenspannwelle gehaltene Peripherie der Linse bearbeitet werden kann, und einem Außendurchmesser der Linsenspannwelle oder einem Außendurchmesser eines Halteelements, das mit der Linsenspannwelle verbunden ist.

## Revendications

1. Appareil de traitement de verre de lunettes comprenant :

un moyen de rotation de verre (100a) pour faire tourner un arbre porte-mandrin de verre (102L, 102R) qui maintient un verre de lunettes ;
un premier moyen de déplacement (100b) pour déplacer l'arbre porte-mandrin de verre dans une direction d'un premier axe (X) de l'arbre porte-mandrin de verre ;
un moyen de rotation d'outil de traitement (300, 420) pour faire tourner un arbre de rotation d'outil de traitement (161a, 400a) auquel est attaché un outil de traitement de périphérie qui traite une périphérie du verre ; et

un moyen de mesure de forme de verre (200) pour mesurer une forme d'une surface de réfraction du verre maintenu par l'arbre porte-mandrin de verre, le moyen de mesure de forme de verre comportant un stylet de traçage (260) configuré pour entrer en contact avec la surface de réfraction du verre ;

un deuxième moyen de déplacement (100c) pour déplacer de manière relative l'arbre porte-mandrin de verre dans une direction dans laquelle une distance entre axes entre l'arbre porte-mandrin de verre et le stylet de traçage est changée ; et

un moyen de commande (50) pour commander les premier et deuxième moyens de déplacement ;

dans lequel le moyen de commande (50) commande les premier et deuxième moyens de déplacement pour amener le stylet de traçage (260) à entrer en contact avec la surface de réfraction du verre et commande ensuite le moyen de rotation de verre (100a) et le deuxième moyen de déplacement (100c) sur la base d'une forme de verre cible et commande le moyen de mesure de forme de verre (200) pour mesurer une forme de la surface de réfraction du verre, et obtient la forme de la surface de réfraction du verre sur la base d'un résultat de détection du premier capteur,

**caractérisé en ce que**,

le moyen de mesure de forme de verre (200) comporte une unité de maintien (250c) qui est configurée pour maintenir le stylet de traçage (260) et le stylet de traçage (260) est configuré pour être incliné vers le premier axe (X) autour d'un deuxième axe (S2) perpendiculaire au premier axe (X), et un premier capteur (257) pour détecter l'inclinaison de l'unité de maintien,

dans lequel le moyen de commande (50) commande le premier moyen de déplacement (100b), au cours de la mesure de forme de verre, de sorte que la position de déplacement du stylet de traçage (260) tombe dans une plage prédéterminée dans la direction du premier axe (direction X) de sorte que le stylet de traçage (260) et le verre maintiennent un état de contact, la plage prédéterminée étant basée sur des informations de courbe de la surface de réfraction du verre obtenues avant le début de la mesure par le moyen de mesure de forme de verre (200) ou du résultat de mesure obtenu après le démarrage de la mesure par le moyen de mesure de forme de verre (200).

2. Appareil de traitement de verre de lunettes selon la revendication 1, dans lequel

le moyen de commande (50) prédit la forme de la surface de réfraction du verre dans la direction du premier axe (X) à chaque angle de rotation du verre sur la base du résultat de mesure obtenu après le démarrage de la mesure par le moyen de mesure de la forme du verre (200), et commande le premier moyen de déplacement (100b) sur la base du résultat de prédiction.

3. Appareil de traitement de verre de lunettes selon l'une quelconque des revendications 1 à 2, dans lequel

le moyen de commande (50) commande le premier moyen de déplacement (100b) de sorte que le stylet de traçage (260) soit situé à une position fixe dans la direction du premier axe (X) à chaque angle de rotation du verre.

4. Appareil de traitement de verre de lunettes selon l'une quelconque des revendications 1 à 3, dans lequel

le moyen de commande (50) obtient la forme de la surface de réfraction du verre correspondant à la forme de verre cible à chaque angle de rotation du verre sur la base du résultat de détection du premier capteur (257) et de la position de déplacement de l'arbre porte-mandrin de verre déplacé par le premier moyen de déplacement (100b).

5. Appareil de traitement de verre de lunettes selon l'une quelconque des revendications 1 à 4, dans lequel

le moyen de rotation d'outil de traitement comporte un premier moyen de rotation d'outil de traitement (300) pour faire tourner un premier arbre de rotation d'outil de traitement (161a) auquel est attaché un premier outil de traitement (168) pour traiter une périphérie du verre, et un deuxième moyen de rotation d'outil de traitement (420) pour faire tourner un deuxième arbre de rotation d'outil de traitement (400a) auquel est attaché un deuxième outil de traitement pour effectuer au moins l'un d'un rainurage et d'un chanfreinage de la périphérie du verre soumise à une finition, et

les premier et deuxième outils de traitement sont agencés de manière à interposer l'arbre porte-mandrin de verre entre les premier et deuxième outils de traitement,

le deuxième outil de traitement est disposé côte à côte avec le stylet de traçage (260), et

le deuxième outil de traitement est situé à l'extérieur d'une plage de mouvement du stylet de traçage (260) dans la direction du premier axe (X).

6. Appareil de traitement de verre de lunettes selon la revendication 5, dans lequel

le deuxième moyen de déplacement (100c) déplace l'arbre porte-mandrin de verre dans la direction dans laquelle la distance entre axes entre l'arbre porte-mandrin de verre et le stylet de traçage (260) est changée,

le deuxième moyen de déplacement (100c) comporte un moyen de changement de distance entre axes pour déplacer l'arbre porte-mandrin de verre dans une deuxième direction dans laquelle une distance entre axes entre l'arbre porte-mandrin de verre et le premier arbre de rotation d'outil de traitement est changée,

une première position du deuxième outil de traitement qui est la plus proche de l'arbre porte-mandrin de verre dans la deuxième direction et une deuxième position du stylet de traçage (260) qui est la plus proche de l'arbre porte-mandrin de verre dans la deuxième direction sont agencées de manière à être espacées d'une distance prédéterminée, où

la distance prédéterminée est une distance qui est une différence entre un diamètre de traitement minimal où la périphérie du verre maintenu par l'arbre porte-mandrin de verre peut être traitée, et un diamètre extérieur de l'arbre porte-mandrin de verre ou un diamètre extérieur d'un élément de maintien attaché à l'arbre porte-mandrin de verre.

**FIG. 1**

# FIG. 2

# FIG. 3

# FIG. 4

# FIG. 5

# FIG. 6A

# FIG. 6B

## FIG. 7

## FIG. 8

# FIG. 9

## FIG. 10A

## FIG. 10B

## FIG. 10C

# FIG. 11

# FIG. 12A

# FIG. 12B

**FIG. 13**

**FIG. 14A**

**FIG. 14B**

## FIG. 15

$$\sqrt{R^2 - rn^2}$$

R

Pn

P1

$\Delta Xn$

Xn

X1

$r1 = \theta 1 \quad rn = \theta n$

## FIG. 16

MOVING MEMBER   SLIT   TRACYING STYLUS   PROCESSING TOOL

MOVE

LENS CHUCK SHAFT

WATERPROOF COVER

MOVING MEMBER   SLIT   TRACYING STYLUS   PROCESSING TOOL

INTERFERENCE

LENS CHUCK SHAFT

WATERPROOF COVER

# FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000317796 A
- JP 2001001815 A
- EP 2319659 A2
- EP 1037008 A2
- JP 4093164 A